(19) **Europäisches Patentamt / European Patent Office / Office européen des brevets**

(11) **EP 2 863 235 B1**

(12) # EUROPEAN PATENT SPECIFICATION

(45) Date of publication and mention
of the grant of the patent:
**13.02.2019 Bulletin 2019/07**

(21) Application number: **12879027.6**

(22) Date of filing: **12.12.2012**

(51) Int Cl.:
*H02S 50/10* (2014.01)   *H02J 3/38* (2006.01)
*H02H 3/04* (2006.01)

(86) International application number:
**PCT/CN2012/086410**

(87) International publication number:
**WO 2013/185455 (19.12.2013 Gazette 2013/51)**

(54) **LOW VOLTAGE RIDE THROUGH DETECTION DEVICE FOR GRID-CONNECTED PHOTOVOLTAIC INVERTER**

VORRICHTUNG ZUM TESTEN VON UNTERSPANNUNGSDURCHLÄUFEN FÜR EINEN NETZGEKOPPELTEN PHOTOVOLTAIKWECHSELRICHTER

DISPOSITIF POUR TESTER DES CONDITIONS DE SOUS-TENSION POUR CONVERTISSEUR PHOTOVOLTAÏQUE CONNECTÉ AU RÉSEAU ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2012 CN 201210201781**

(43) Date of publication of application:
**22.04.2015 Bulletin 2015/17**

(73) Proprietors:
• **China Electric Power Research Institute**
  **Beijing 100192 (CN)**
• **State Grid Corporation of China**
  **Beijing 100031 (CN)**

(72) Inventors:
• **LI, Zhen**
  **Beijing 100192 (CN)**
• **LV, Hongshui**
  **Beijing 100192 (CN)**
• **ZHANG, Junjun**
  **Beijing 100192 (CN)**
• **ZHOU, Ming**
  **Beijing 100192 (CN)**
• **ZHAO, Zilong**
  **Beijing 100192 (CN)**
• **QIN, Xiaodi**
  **Beijing 100192 (CN)**

(74) Representative: **Vidon Brevets & Stratégie**
  **16B, rue de Jouanet**
  **BP 90333**
  **35703 Rennes Cedex 7 (FR)**

(56) References cited:
**EP-A1- 2 146 264      CN-A- 101 656 782**
**CN-A- 102 129 036    CN-A- 102 435 882**
**CN-A- 102 721 883    US-A1- 2003 230 937**
**US-A1- 2009 066 166  US-A1- 2009 212 748**
**US-A1- 2012 087 048**

• ZHENG FEI ET AL: "A novel voltage sag generator for low voltage ride-through testing of grid-connected PV system", 2012 IEEE INTERNATIONAL CONFERENCE ON COMPUTER SCIENCE AND AUTOMATION ENGINEERING (CSAE), 1 May 2012 (2012-05-01), pages 136-140, XP055246583, DOI: 10.1109/CSAE.2012.6272744 ISBN: 978-1-4673-0087-2
• IVAN JORGE GABE ET AL: "Design of a voltage sag generator based on impedance switching", IECON 2011 - 37TH ANNUAL CONFERENCE ON IEEE INDUSTRIAL ELECTRONICS SOCIETY, IEEE, 7 November 2011 (2011-11-07), pages 3140-3145, XP032104966, DOI: 10.1109/IECON.2011.6119812 ISBN: 978-1-61284-969-0

• SONG, HAITAO: 'The Development of low voltage ride through (LVRT) test device' SCIENCE-ENGINEERING (B), CHINA MASTER'S THESES FULL-TEXT DATABASE 10 October 2011, pages C042 - 98, XP008176013

**Description**

**FIELD OF THE INVENTION**

This invention relates to a kind of detecting device, in particular, relates to a low voltage ride through detecting device of grid-connected photovoltaic inverter.

**BACKGROUND OF THE INVENTION**

With the rapid development of photovoltaic industry in our country, the proportion of photovoltaic power generation in the power grid is increasing. When the power grid failure leads to voltage dips, photovoltaic power generation system splitting will affect the stability of power system, even lead to a cascading failure. When system fault occurs, photovoltaic inverter, as the core component of photovoltaic power plant, can stay connected with the grid, and support the grid with reactive power until the grid recover, and thereby "ride through" the low voltage. Photovoltaic inverter-detecting laboratory has to possess detecting device to detect photovoltaic inverter's capability of Low voltage ride through.

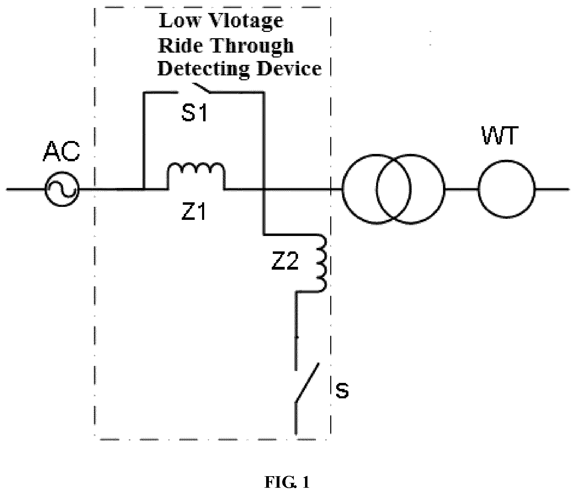

The international wind and photovoltaic power-related standard indicates that passive reactor grounding short circuit and interphase short circuit have to be used to simulate power grid fault, and the device shown in figure 1 can be used to low voltage ride through. Impedance $Z_1$ in figure 1 is current-limiting reactor, which is designed to limit the impact on the upper grid when short-circuit develops in limiting device. Normally bypass switch is set in $Z_1$ to paralleled connect to bypass. $Z_2$ in figure 1 is Short-circuit reactance, the size of which will be adjusted on the basis of possible dropping amplitude. WT represents wind turbine (substituted by photovoltaic power generation unit during photovoltaic detection). The grid voltage sags can be stimulated by closing the switch S, and the switch S should reflect the precise time of closing and disconnecting, which can be realized by mechanical circuit breaker and power electronic device.

Figure 1 with passive reactor has several characteristics : First: large power has to be used, and the volume of device will be large accordingly; Second: the drop point of device is confined to the number of reactor, and has no possibility to satisfy many drop amplitudes; Third: cumbersome steps to change configuration and change main circuit structure make fast implementation of voltage sag with multiple amplitudes and forms harder.

Based on international standard and advanced foreign standards, the device shown in figure 1 with passive reactor must satisfy the following several conditions to actualize Low voltage ride through:

Firstly, capacity of short circuit of detecting device has to be over three times photovoltaic inverter detected,

$$S_k = \frac{U_n^2}{(Z_1 + Z_2 + Z_k)^2} > 3P_n$$

In which, $U_n$ indicates rated voltage of tie-in point. $P_n$ indicates rated power of photovoltaic inverter. $Z_1$ and $Z_2$ represent current-limiting reactor and Short circuit reactance of detecting device . $Z_k$ indicates the equivalent value of the short-circuit reactance point of Common Coupling. So are the following formulas.

Secondly, the drop amplitude of detecting device will be actualized through inductance value of reactor configured $Z_1$ and $Z_2$, and the value of Voltage sag will be worked out as follow formula:

$$k = \frac{Z_2}{Z_1 + Z_2 + Z_k}$$

Thirdly, low voltage ride through detecting device are required to perform drop tests with five different amplitudes, which means $k$ is required to have five different values.

Forth: when low voltage ride through being detected, the deviation of the voltage amplitude before, after and at the device drop time must be less than ±5%, and drop time of the device and recovery time also should be less than 20ms.

Short-circuit impedance of Point of Common Coupling from different detection labs varies, and short-circuit impedance at the same connection point also varies with different loads, therefore the value of $Z_k$ is not certain. That makes device difficult to satisfy the four conditions above, when it matches reactance value of $Z_1$ and $Z_2$. Besides even the reactor configured $Z_1$ and $Z_2$ meet the conditions, cumbersome steps to replace reactor of the device still make fast implementation of voltage sag with multiple amplitudes and forms harder.

Sag generators for testing low voltage ride through are disclosed by Zheng Fei et al ("A novel voltage sag generator for low voltage ride-through testing of grid-connected PV system", IEEE International Conference on Computer Science and Automation Engineering, 2012), Ivan Jorge Gabe et al ("Design of a voltage sag generator based on impedance switching", 37th Annula Conference on IEEE Industrial Electronics Society, 2011) as well as in patent publications EP 2 146 264 A1, US 2009/212748 A1 and US 2009/066166 A1.

## SUMMARY OF THE INVENTION

For the deficiencies of existing technologies, this invention provides a Low voltage ride through detecting device of grid-connected photovoltaic inverter. Under the circumstance that short circuit capacity remains unchanged, the device can satisfy the requirement of implementation of voltage sag with multiple amplitudes using a fewer reactors by changing the ratio of current limiting reactor and short circuit reactance via different switch modes of several circuit breakers, which make it qualified to detect the capability of Low voltage ride through of grid-connected photovoltaic inverter.

The present invention is set out in the appended set of claims. The embodiments and/or examples of the present disclosure which are not covered by the appended claims are considered as not being part of the present invention.

**The aim of the invention is realized by adopting the following technical solutions:**

A Low voltage ride through detecting device of grid-connected photovoltaic inverter, whose improvement lies in, said device includes a current limiting reactor, short circuit reactors and a combination earth switch.

Said current limiting reactor, intermediate reactor-breaker unit, short circuit reactors and the combination earth switch are connected one by one in series;

Said current limiting reactor is connected to 10kV power grid; said intermediate reactor-breaker unit, and the combination earth switch are connected to the neutral point of high voltage side of transformer respectively;

Said photovoltaic inverter is connected to the grid-connected photovoltaic inverter.

The current limiting reactor Lx in technical solution is the one with adjustable parameter; the parameter of said short circuit reactor Ld is also adjustable.

The intermediate reactor comprises intermediate reactors (L1~L4) ;said circuit breaker comprises circuit breakers (S1~S5).

The input end of said intermediate reactor L1 is connected to the circuit-breaker S1;

> The output end of said intermediate reactor L1 and the input end of said intermediate reactor L2 are connected to the circuit breaker S2;
> The output end of said intermediate reactor L2 and the input end of said intermediate reactor L3 are connected to the circuit breaker S3;
> The output end of said intermediate reactor L3 and the input end of said intermediate reactor L4 are connected to the circuit breaker S4;
> The output end of said intermediate reactor L4 is connected to the circuit breaker S5;
> The preferred intermediate reactors (L1~L4) are equivalent reactance with fixed parameter.

The preferred circuit breakers (S1~S5 ) are designed to change the combination mode of said intermediate reactors (L1~L4) ,and make them play the roles of current-limiting and short circuit respectively.

The combination earth switch Sd is the switch combination mode of circuit breakers. Said combination earth switch Sd includes:

> Circuit breakers (QS1~QS3): using three phase circuit breaker to connect one phase of the detecting device, respectively, and controlling the tripping and closing formation fault type of each phase A, B and C individually;
> Circuit breaker QS4: controlling whether the detecting device will be ground short or not;
> Circuit breaker QF1: being used to accomplish the first voltage sags of the detecting device;
> Circuit breaker QF2: being used to accomplish the second voltage sags of the detecting device;
> The preferred, said it after the parallel connection of said circuit breaker QFland QF2, they will be connected to the circuit breakers QS1, QS2 and QS3 respectively.

The preferred, circuit breakers (QS1~QS4, QFland QF2) are all three phase circuit breaker.

**Compared with the prior art, the invention has following advantages:**

> 1.The Low voltage ride through detecting device of grid-connected photovoltaic inverter provided by this invention is simple in structure: The traditional passive reactor detection device requires configuring separately current limiting reactor and short circuit reactor, and each type of reactor needs to be configured multiple reactors in combination.

Each intermediate reactor of the Low voltage ride through detecting device provided by this invention can be functioned as current-limiting reactor and Short circuit reactance, and thereby fewer reactors are needed, and the cost, volume, maintenance of the Low voltage ride through detecting device will be reduced accordingly.

2. The Low voltage ride through detecting device of grid-connected photovoltaic inverter provided by this invention has the advantages of simple structure and convenient operation: The operating steps of the traditional passive reactor detection device to replace impedance of the device on detection are cumbersome to make fast implementation of voltage sag with multiple amplitudes and forms harder. Low voltage ride through detecting device provided by this invention are capable of accomplishing voltage sag with multiple amplitudes and forms harder by tripping and closing of different circuit breaker, and thereby reduce the detection time and workload.

3. The Low voltage ride through detecting device of grid-connected photovoltaic inverter provided by this invention has the simple structure but multiple functions:

The traditional passive reactor detection device which only configured one circuit breaker to simulate fault, makes circuit breaker speedy tripping and closing impossible. The low voltage ride through detecting device provided by this invention use two circuit breakers to trip and close in sequence, can rapid accomplish the second voltage sag, and thereby can truly simulate the resection operation condition after unsuccessful reclosing when grid fault occurs, and thus can accomplish simulating more real operation condition of Low voltage ride through of photovoltaic inverter.

**BRIEF DESCRIPTION OF THE DRAWINGS**

Figure 1 is a schematic diagram of Low voltage ride through detecting device of existing technologies;
Figure 2 is a schematic diagram of Low voltage ride through detecting device of grid-connected photovoltaic inverter provided by this invention;
Figure 3 is a schematic diagram of combination earth switch from Low voltage ride through detecting device of grid-connected photovoltaic inverter.
Figure 4 is a structure schematic diagram of the main circuit topology of the specific embodiments of Low voltage ride through detecting device of grid-connected photovoltaic inverter;
Figure 5 is a schematic diagram of voltage drop point of Low voltage ride through detecting device of grid-connected photovoltaic inverter provided by the invention.

**DETAILED DESCRIPTION OF EMBODIMENTS**

The detail of the embodiments of the present invention is described as below incorporated with the figures by way of cross-reference.

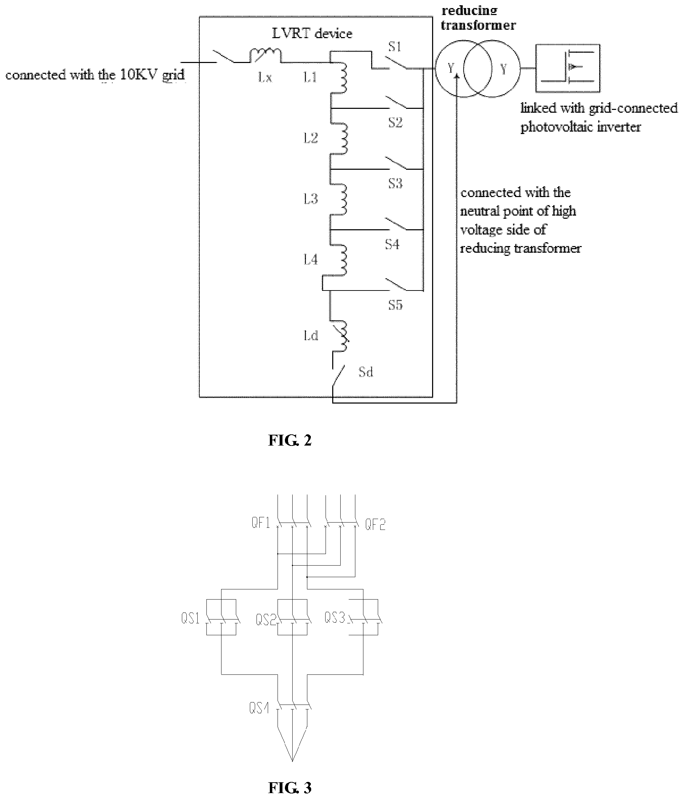

As shown in Fig, Fig. 2 is a schematic diagram of Low voltage ride through detecting device of grid-connected photovoltaic inverter, which comprises current limiting reactor, short circuit reactance and combination earth switch; The current limiting reactor, the intermediate reactor-Circuit breaker unit, short circuit reactance and combination earth switch are connected one by one in series; The current-limiting reactor is connected to 10kV power grid; The intermediate reactor-circuit breaker unit and combination earth switch are connected to the neutral point of the high voltage side of the reducing transformer, respectively; Said reducing transformer is inserted to grid-connected photovoltaic inverter; The current-limiting reactor $L_x$ is the one with adjustable parameter; The Short circuit reactance $L_d$ is the one with adjustable parameter.

The intermediate reactor comprises $L_1 \sim L_4$; the Circuit breaker comprises $S_1 \sim S_5$; The input end of intermediate reactor $L_1$ is joined to Circuit breaker $S_1$; The output end of intermediate reactor $L_1$ and the input end of intermediate reactor $L_2$ are both joined to Circuit breaker $S_2$; The output end of intermediate reactor $L_2$ and input end of intermediate reactor $L_3$ are both joined to Circuit breaker $S_3$; The output end of intermediate reactor $L_3$ and the input of intermediate reactor $L_4$ are both joined to Circuit breaker S4; The output end of intermediate reactor $L_4$ is joined to Circuit breaker S5; The intermediate reactor $L_1$, $L_2$, $L_3$ and $L_4$ are equivalent reactance with the fixed parameters; The circuit breaker $S_1$, $S_2$, $S_3$, $S_4$ and $S_5$ are designed to alter the tripping and closing combinations of intermediate reactor ($L_1 \sim L_4$). The Circuit breaker $S_1$, $S_2$, $S_3$, $S_4$ and $S_5$ are designed to alter the combinations of $L_1$, $L_2$, $L_3$ and $L_4$, enabling the different intermediate reactors to playing the role of current-limiting and short-circuited respectively; the drop amplitude table is formed by the different Switch combinations of the Circuit breaker $S_1$, $S_2$, $S_3$, $S_4$ and $S_5$, as in table 1 below.

TABLE 1 The drop amplitude table formed by the different Switch combinations of the Circuit breaker $S_1$, $S_2$, $S_3$, $S_4$ and $S_5$ of the present invention

| combinations | $S_1$ | $S_2$ | $S_3$ | $S_4$ | $S_5$ | drop amplitudes |
|---|---|---|---|---|---|---|
| 1 | on trip | off trip | off trip | off trip | off trip | $k = \dfrac{4Z + Z_d}{4Z + Z_d + Z_x}$ |
| 2 | off trip | on trip | off trip | off trip | off trip | $k = \dfrac{3Z + Z_d}{4Z + Z_d + Z_x}$ |
| 3 | off trip | off trip | On trip | off trip | off trip | $k = \dfrac{2Z + Z_d}{4Z + Z_d + Z_x}$ |
| 4 | off trip | off trip | off trip | On trip | off trip | $k = \dfrac{Z + Z_d}{4Z + Z_d + Z_x}$ |
| 5 | off trip | off trip | off trip | off trip | On trip | $k = \dfrac{Z_d}{4Z + Z_d + Z_x}$ |
| 6 | On trip | On trip | Off trip | Off trip | Off trip | $k = \dfrac{3Z + Z_d}{3Z + Z_d + Z_x}$ |
| 7 | Off trip | On trip | On trip | Off trip | Off trip | $k = \dfrac{2Z + Z_d}{3Z + Z_d + Z_x}$ |
| 8 | Off trip | Off trip | On trip | On trip | Off trip | $k = \dfrac{Z + Z_d}{3Z + Z_d + Z_x}$ |
| 9 | Off trip | Off trip | Off trip | On trip | On trip | $k = \dfrac{Z_d}{3Z + Z_d + Z_x}$ |

Note: $Z_x$ and $Z_d$ represent the inductance value of $L_x$ and $L_d$. Reactor $L_1$~$L_4$ are equivalent reactance, the inductance value of which is Z.

As shown in the table above, the formulations of the drop amplitude of the combination 1~5, the denominators are the same, and numerators are different. The drop amplitude of the combination 6~9, the denominators are the same, and numerators are different, that would guarantee Low voltage ride through detecting device has different values, with the capacity of short circuit being equal.

As shown in Fig. 3, Fig.3 is a schematic diagram of combination earth switch from Low voltage ride through detecting device of grid-connected photovoltaic inverter of the present invention, and combination earth switch $S_d$ is the Switch combination of Circuit breaker; Switch combination Sd includes:

Circuit breaker $QS_1$, $QS_2$ and $QS_3$: circuit breakers ($QS_1$~$QS_3$) are three phase circuit breaker to connect to a phase of the detection device respectively, and controlling the tripping and closing of phase A, B and C respectively, to form fault type ; Circuit breaker QS4 controls whether the detecting device will be ground short or not; Circuit breakers QF1 will be used to accomplish the first voltage sags of the detecting device; Circuit breakers QF2 will be used to accomplish the second voltage sags of the detecting device;

After being paralleled, the Circuit breaker QF1 and QF2 are connected to circuit breaker QS1, QS2 and QS3, respectively; Circuit breaker QS1, QS2 and QS3 are connected to Circuit breaker QS4, respectively. Circuit breaker QS1, QS2, QS3, QS4 , QF1 and QF2 are all three phase circuit breaker. The fault types formed by the combination of each circuit breaker in Ground combination switch are shown in table 2 below.

TABLE 2 The fault types formed by the combination of Each Circuit breaker in Ground combination switch

| combinations | $QS_1$ | $QS_2$ | $QS_3$ | $QS_4$ | The method of voltage sags |
|---|---|---|---|---|---|
| 1 | on trip | off trip | off trip | on trip | Phase A ground short |
| 2 | off trip | on trip | off trip | on trip | Phase B ground short |
| 3 | off trip | off trip | on trip | on trip | Phase C ground short |

(continued)

| combinations | $QS_1$ | $QS_2$ | $QS_3$ | $QS_4$ | The method of voltage sags |
|---|---|---|---|---|---|
| 4 | on trip | on trip | off trip | off trip | short circuit between phase A and phase B |
| 5 | off trip | on trip | on trip | off trip | short circuit between phase B and phase C |
| 6 | on trip | off trip | on trip | off trip | short circuit between phase C and phase A |
| 7 | on trip | on trip | off trip | on trip | two Phases A B ground short |
| 8 | off trip | on trip | on trip | on trip | two Phases BC ground short |
| 9 | on trip | off trip | on trip | on trip | Two Phases CA ground short |
| 10 | on trip | on trip | on trip | off trip | Three Phases ABC ground short |

After on trip or off trip of the circuit breaker QS1, QS2, QS3and QS4 was determined, the detection device accomplishes the Voltage sag by operating two three phrase circuit breaker in parallel. First trip on circuit breaker QFlto accomplish the first Voltage sag, and then trip off Circuit breaker QF1, leaving the Voltage back to normal, and then trip off Circuit breaker QF2, accomplishing the second Voltage sag.

The following detailed description of preferred embodiment of the invention, will be better understood when read in conjunction with the appended drawings.

Aiming at 500kW maximum Photovoltaic inverter joined to 10kV voltage through Step-up transformer, Low voltage ride through detecting device of the invention was designed as follows.

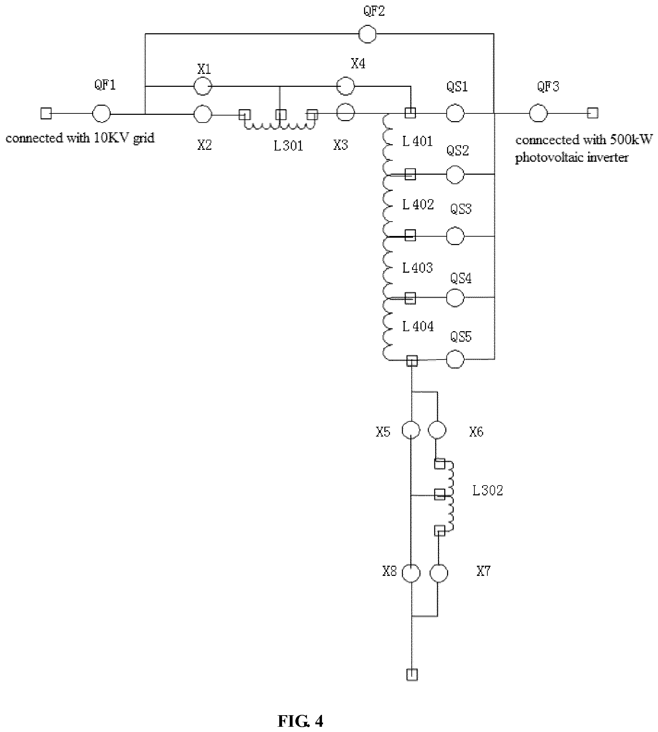

The more widely available Multi tap reactors will be selected for current-limiting reactor L301 and short circuit reactance L302 respectively, which equipped three taps of 0,10mH and 30mH, while equivalent reactance of L401~L404 are all 40mH. The different off-on trip conditions of X1~X4 distinguish four values of the current-limiting reactor as 0mH, 10mH, 15mH and 30mH (Note: The inductance Between the two Taps of 10Mh and 30mH is around 15mH).As shown in following tab3, switching principle of Short circuit reactance dittos, which would be operated by the normal three phrase Short circuit reactance X5~X8. As shown in figure4, Fig. 4 is a structure schematic diagram of the main circuit topology of the specific embodiments of Low voltage ride through detecting device of grid-connected photovoltaic inverter;

TABLE 3 The four values of the current-limiting reactor as 0mH, 10mH, 15mH and 30mH distinguished by X1~X4 The different off-on trip conditions of X1~X4

| $X_1$ condition | $X_2$condition | $X_3$condition | $X_4$conditon | The inductance value of current-limiting reactor L301 |
|---|---|---|---|---|
| on trip | off trip | off trip | on trip | 0mH |
| off trip | on trip | off trip | on trip | 10mH |
| on trip | off trip | on trip | off trip | 15mH |
| off trip | on trip | on trip | off trip | 30mH |

Switch combination modes as follows:

A, QS1 being on trip, QS2-QS5 being off trip: All the equivalent intermediate reactors play the role of short circuit.

B, QS2 being on trip, QS1, QS3-QS5 being off trip: L401 plays the role of current-limiting, and L402-L304 play the role of short circuit.

C, QS3 being on trip, QS1, QS2, QS4, QS5 being off trip: L401 and L402 play the role of current-limiting, and L403 and L404 play the role of short circuit.

D, QS4 being on trip, QS1-QS3 and QS5 being off trip: L401-L403 play the role of current-limiting and L404 play the role of short circuit.

E, QS5 being on trip, QS1-QS4 being off trip: all the intermediate reactors play the role of current-limiting.

F, QS1-QS2 being on trip, QS3-QS5 being off trip: L402-L404 play the role of short circuit.

G, G, QS2-QS3 being on trip, QS1, QS4 and QS5 being off trip: L401 play the role of current-limiting, and L403, L404 play the role of short circuit.

H, H, QS3-QS4 being on trip, QS1,QS2 and QS5 off trip: L401 and L402 play the role of current-limiting, L404 play the role of short circuit.

I, I, QS3-QS5 being on trip, QS3-QS5 being off trip: L401-L403 play the role of current-limiting.

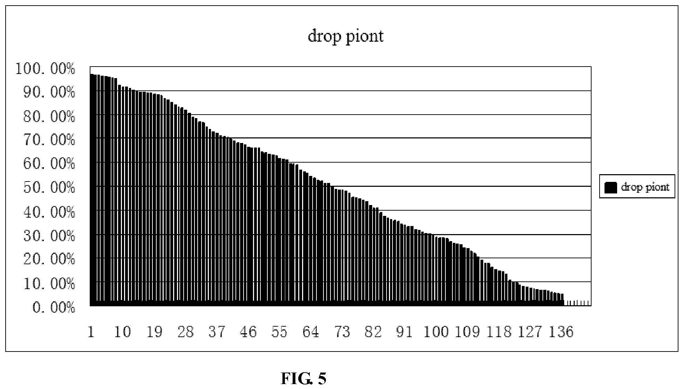

The foregoing nine combination modes , mixed with the different value of current-limiting reactor and Short circuit reactance, show that 144 kinds of amplitude of voltage sags and 1440 kinds of drop point would be obtained, and range would cover 0%, 4.85%-96.90%, and the range of capacity of short circuit would be 1.71-2.54MVA. The schematic diagram of Low voltage ride through detecting device provided by the invention is shown in figure 5.

The foregoing illustrating, as well as the detailed description of preferred embodiment of the invention, will be better understood when read in conjunction with the appended drawings. For the purposes of illustrating the invention, there are shown in the drawings embodiments which are presently preferred. It should be understood, however, that the invention is not limited to the precise arrangement and instrumentalities shown.

**Claims**

1. A low voltage ride through detecting device for a grid-connected photovoltaic inverter,
   said device including for each of three phases (A, B, C) a current limiting reactor (Lx), a short circuit reactor (Ld) and an intermediate reactor-breaker unit,
   said device further including a switch unit (Sd); wherein each intermediate reactor-breaker unit is connected to the corresponding current limiting reactor (Lx) and the short circuit reactor (Ld), the switch unit (Sd) is connected to each of the short circuit reactors (Ld); wherein said current limiting reactors (Lx) are configured to be connected to the respective three phases of a 10 kV power grid; the intermediate reactor-breaker units are configured to be connected to the respective three phases of the high voltage grid side of a reducing transformer and the switch unit (Sd) is configured to be connected to the neutral point of the high voltage grid side of the reducing transformer; wherein said transformer is connected to the grid-connected photovoltaic inverter; wherein each current limiting reactor (Lx) is one with an adjustable parameter; a parameter of each short circuit reactor (Ld) is also adjustable; **characterised in that**,
   each intermediate reactor-breaker unit comprises first, second, third and fourth intermediate reactors (L1, L2, L3, L4) and first, second, third, fourth and fifth circuit breakers (S1, S2, S3, S4, S5) wherein the first circuit breaker (S1) is connected between a connection point of the first intermediate reactor (L1) and corresponding current limiting reactor (Lx) and the transformer; wherein the second circuit breaker (S2) is connected between a connection point of the first intermediate reactor (L1) and second intermediate reactor (L2) and the transformer; wherein the third circuit breaker (S3) is connected between a connection point of the second intermediate reactor (L2) and third intermediate reactor (L3) and the transformer; wherein the fourth circuit breaker (S4) is connected between a connection point of the third intermediate reactor (L3) and fourth intermediate reactor (L4) and the transformer; wherein the fifth circuit breaker (S5) is connected between a connection point of the fourth intermediate reactor (L4) and corresponding short circuit reactor (Ld) and the transformer; said switch unit (Sd) is a combination of circuit breakers, said combination including:
   first, second and third three phase circuit breakers (QS1, QS2, QS3) which are configured to connect each phase of the detecting device, respectively, and control the tripping and closing formation fault type of each phase (A, B, C) individually; a sixth circuit breaker (QS4) which is configured to control whether the detecting device is ground shorted or not; a seventh circuit breaker (QF1) which is configured to accomplish the first voltage sags of the detecting device; an eighth circuit breaker (QF2) which is configured to accomplish the second voltage sags of the detecting device.

2. A Low voltage ride through detecting device according to claim 1, **characterised in that**,
   said intermediate reactors (L1, L2, L3, L4) are equivalent reactances with fixed parameter.

3. A Low voltage ride through detecting device according to claim 1, **characterised in that**,
   said first, second, third, fourth and fifth circuit breakers (S1, S2, S3, S4, S5) are designed to change the combination mode of corresponding first, second, third and fourth intermediate reactors (L1, L2, L3, L4) and make them play the roles of current-limiting and short circuit respectively.

4. A Low voltage ride through detecting device according to claim 1, **characterised in that**,
   after the parallel connection of said seventh and eighth circuit breakers (QF1, QF2), they are connected to the three phase circuit breakers (QS1, QS2, QS3), respectively.

5. A Low voltage ride through detecting device according to claim 1, **characterised in that**,
the seventh and eighth circuit breakers (QF1, QF2) are also three phase circuit breakers.


**Patentansprüche**

1. Low-Voltage-Ride-Trough-Erfassungsvorrichtung für einen netzverbundenen Photovoltaikumrichter, wobei die Vorrichtung für jede der drei Phasen (A, B, C) eine Strombegrenzungsdrossel (Lx), eine Kurzschlussdrossel (Ld) und eine Zwischendrosselunterbrechereinheit umfasst, wobei die Vorrichtung ferner eine Schalteinheit (Sd) umfasst; wobei jede Zwischendrosselunterbrechereinheit mit der entsprechenden Strombegrenzungsdrossel (Lx) und der Kurzschlussdrossel (Ld) verbunden ist und die Schalteinheit (Sd) mit jeder der Kurzschlussdrosseln (Ld) verbunden ist;
wobei die Strombegrenzungsdrosseln (Lx) eingerichtet sind, mit der entsprechenden der drei Phasen eines 10 kV Energieversorgungsnetzes verbunden zu werden, die Zwischendrosselunterbrechereinheiten eingerichtet sind, jeweils mit einer der drei Phasen der Hochspannungsnetzseite eines Reduzierungstransformators verbunden zu werden, und die Schalteinheit (Sd) eingerichtet ist, mit einem neutralen Punkt der Hochspannungsnetzseite des Reduzierungstransformators verbunden zu werden;
wobei der Transformator mit dem netzverbundenen Photovoltaikumrichter verbunden ist;
wobei jede Strombegrenzungsdrossel (Lx) eine mit einem einstellbaren Parameter ist; ein Parameter jeder Kurzschlussdrossel (Ld) auch einstellbar ist;
**dadurch gekennzeichnet, dass**
jede Zwischendrosselunterbrechereinheit erste, zweite, dritte und vierte Zwischendrosseln (L1, L2, L3, L4) und erste, zweite, dritte, vierte und fünfte Stromunterbrecher (S1, S2, S3, S4, S5) umfasst;
wobei der erste Stromunterbrecher (S1) zwischen einem Verbindungspunkt der ersten Zwischendrossel (L1) und der entsprechenden Strombegrenzungsdrossel (Lx) und dem Transformator verbunden ist;
wobei der zweite Stromunterbrecher (S2) zwischen einem Verbindungspunkt der ersten Zwischendrossel (L1) und der zweiten Zwischendrossel (L2) und dem Transformator verbunden ist;
wobei der dritte Stromunterbrecher (S3) zwischen einem Verbindungspunkt der zweiten Zwischendrossel (L2) und der dritten Zwischendrossel (L3) und dem Transformator verbunden ist;
wobei der vierte Stromunterbrecher (S4) zwischen einem Verbindungspunkt der dritten Zwischendrossel (L3) und der vierten Zwischendrossel (L4) und dem Transformator verbunden ist;
wobei der fünfte Stromunterbrecher (S5) zwischen einem Verbindungspunkt der vierten Zwischendrossel (L4) und der entsprechenden Kurzschlussdrossel (Ld) und dem Transformator verbunden ist;
die Schalteinheit (Sd) eine Kombination von Stromunterbrechern ist, wobei die Kombination umfasst:

erste, zweite und dritte Dreiphasenstromunterbrecher (QS1, QS2, QS3), die eingerichtet sind, jede Phase der Erfassungsvorrichtung entsprechend zu verbinden und den Auslöse- und Schließformationsfehlertyp jeder Phase (A, B, C) individuell zu steuern;
einen sechsten Stromunterbrecher (QS4), der eingerichtet ist, um zu steuern, ob die Erfassungsvorrichtung geerdet wird oder nicht;
einen siebten Stromunterbrecher (QF1), der eingerichtet ist, um die ersten Spannungssenkungen der Erfassungsvorrichtung zu erreichen;
einen achten Stromunterbrecher (QF2), der eingerichtet ist, um die zweiten Spannungssenkungen der Erfassungsvorrichtung zu erreichen.

2. Low-Voltage-Ride-Trough-Erfassungsvorrichtung nach Anspruch 1,
**dadurch gekennzeichnet, dass**
die Zwischendrosseln (L1, L2, L3, L4) äquivalente Drosseln mit festen Parametern sind.

3. Low-Voltage-Ride-Trough-Erfassungsvorrichtung nach Anspruch 1,
**dadurch gekennzeichnet, dass**
der erste, zweite, dritte, vierte und fünfte Stromunterbrecher (S1, S2, S3, S4, S5) ausgebildet sind, den Kombinationsmodus der entsprechenden ersten, zweiten, dritten und vierten Zwischendrosseln (L1, L2, L3, L4) zu ändern und sie dazu zu bringen, ihren Anteil an Strombegrenzung und Kurzschluss entsprechend zu haben.

4. Low-Voltage-Ride-Trough-Erfassungsvorrichtung nach Anspruch 1,
**dadurch gekennzeichnet, dass**
nach der parallelen Verbindung des siebten und achten Stromunterbrechers (QF1, QF2) diese mit den Dreiphasenstromunterbrechern (QS1, QS2, QS3) entsprechend verbunden sind.

5. Low-Voltage-Ride-Trough-Erfassungsvorrichtung nach Anspruch 1,
**dadurch gekennzeichnet, dass**
der siebte und achte Stromunterbrecher (QF1, QF2) auch Dreiphasenstromunterbrecher sind.


**Revendications**

1. Dispositif de détection de creux de tension pour un convertisseur photovoltaïque connecté au réseau, ledit dispositif comportant pour chacune de trois phases (A, B, C) un inducteur de limitation de courant (Lx), un inducteur de court-circuit (Ld) et une unité de disjoncteur-inducteur intermédiaire, ledit dispositif comportant en outre une unité de commutateur (Sd) ;

dans lequel chaque unité de disjoncteur-inducteur intermédiaire est connectée à l'inducteur de limitation de courant (Lx) et à l'inducteur de court-circuit (Ld) correspondants, l'unité de commutateur (Sd) est connectée à chacun des inducteurs de court-circuit (Ld) ;

dans lequel lesdits inducteurs de limitation de courant (Lx) sont configurés pour être connectés aux trois phases respectives d'un réseau électrique de 10 kV; les unités de disjoncteur-inducteurs intermédiaires sont configurées pour être connectées aux trois phases respectives du côté réseau haute tension d'un transformateur réducteur, et l'unité de commutateur (Sd) est configurée pour être connectée au point neutre du côté réseau haute tension du transformateur réducteur ;

dans lequel ledit transformateur est connecté au convertisseur photovoltaïque connecté au réseau ;

dans lequel chaque inducteur de limitation de courant (Lx) est doté d'un paramètre réglable ; un paramètre de chaque inducteur de court-circuit (Ld) est également réglable ;

**caractérisé en ce que**,

chaque unité de disjoncteur-inducteur intermédiaire comprend des première, deuxième, troisième et quatrième inducteurs intermédiaires (L1, L2, L3, L4) et des premier, deuxième, troisième, quatrième et cinquième disjoncteurs (S1, S2, S3, S4, S5) ;

dans lequel le premier disjoncteur (S1) est connecté entre un point de connexion du premier inducteur intermédiaire (L1) et d'un inducteur de limitation de courant (Lx) correspondant et le transformateur ;

dans lequel le deuxième disjoncteur (S2) est connecté entre un point de connexion du premier inducteur intermédiaire (L1) et du deuxième inducteur intermédiaire (L2) et le transformateur ;

dans lequel le troisième disjoncteur (S3) est connecté entre un point de connexion du deuxième inducteur intermédiaire (L2) et du troisième inducteur intermédiaire (L3) et le transformateur ;

dans lequel le quatrième disjoncteur (S4) est connecté entre un point de connexion du troisième inducteur intermédiaire (L3) et du quatrième inducteur intermédiaire (L4) et le transformateur ;

dans lequel le cinquième disjoncteur (S5) est connecté entre un point de connexion du quatrième inducteur intermédiaire (L4) et un inducteur de court-circuit (Ld) correspondant et le transformateur ;

ladite unité de commutateur (Sd) est une combinaison de disjoncteurs, ladite combinaison comportant :

des premier, deuxième et troisième disjoncteurs triphasés (QS1, QS2, QS3) qui sont configurés pour connecter chaque phase du dispositif de détection, respectivement, et commander individuellement le type par défaut de formation de fermeture et de déclenchement de chaque phase (A, B, C) ;

un sixième disjoncteur (QS4) qui est configuré pour contrôler si le dispositif de détection est court-circuité à la terre ou non ;

un septième disjoncteur (QF1) qui est configuré pour accomplir les premières baisses soudaines de tension du dispositif de détection ;

un huitième disjoncteur (QF2) qui est configuré pour accomplir les secondes baisses soudaines de tension du dispositif de détection.

2. Dispositif de détection de creux de tension selon la revendication 1, **caractérisé en ce que**, lesdits inducteurs intermédiaires (L1, L2, L3, L4) ont des réactances équivalentes à paramètre fixe.

3. Dispositif de détection de creux de tension selon la revendication 1, **caractérisé en ce que**, lesdits premier, deuxième, troisième, quatrième et cinquième disjoncteurs (S1, S2, S3, S4, S5) sont conçus pour changer le mode de combinaison de premier, deuxième, troisième et quatrième inducteurs intermédiaires (L1, L2, L3, L4) correspondants et leur faire jouer les rôles de limitation de courant et de court-circuit respectivement.

4. Dispositif de détection de creux de tension selon la revendication 1, **caractérisé en ce que**, après la connexion en parallèle desdits septième et huitième disjoncteurs (QF1, QF2), ils sont connectés aux disjoncteurs triphasés (QS1, QS2, QS3), respectivement.

5. Dispositif de détection de creux de tension selon la revendication 1, **caractérisé en ce que**, les septième et huitième disjoncteurs (QF1, QF2) sont également des disjoncteurs triphasés.

**FIG. 1**

**FIG. 2**

**FIG. 3**

**FIG. 4**

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2146264 A1
- US 2009212748 A1
- US 2009066166 A1

**Non-patent literature cited in the description**

- **ZHENG FEI et al.** A novel voltage sag generator for low voltage ride-through testing of grid-connected PV system. *IEEE International Conference on Computer Science and Automation Engineering,* 2012

- **IVAN JORGE GABE et al.** Design of a voltage sag generator based on impedance switching. *37th Annula Conference on IEEE Industrial Electronics Society,* 2011